# EUROPÄISCHE PATENTSCHRIFT

(11) **EP 2 965 600 B1**
(45) Veröffentlichungstag und Bekanntmachung des Hinweises auf die Patenterteilung: **09.11.2016**
(21) Anmeldenummer: 14002403.5
(22) Anmeldetag: 12.07.2014
(51) Int. Cl.: A01B 33/02

(54) **Bodengeführtes Arbeitsgerät**
Ground-guided work device
Appareil de travail guidé au sol

(43) Veröffentlichungstag der Anmeldung: 13.01.2016
(73) Patentinhaber: Viking GmbH, 6336 Langkampfen (AT)
(72) Erfinder: Biebl, Daniela, 83098 Brannenburg (DE); Hager, Georg, 6322 Kirchbichl (AT)
(74) Vertreter: Reinhardt, Annette

(56) Entgegenhaltungen:
- WO-A1-2014/142906
- DE-B- 1 082 443
- DE-U1-202010 001 859
- US-A1- 2013 121 753

## Beschreibung

Die Erfindung betrifft ein bodengeführtes Arbeitsgerät der im Oberbegriff des Anspruchs 1 angegebenen Gattung.

Aus der DE 20 2010 001 859 U1 ist ein bodengeführtes Arbeitsgerät, nämlich eine Motorhacke, mit einer Lenkeranordnung bekannt. Die Lenkeranordnung ist über ein platten-förmiges Antivibrationselement an einem Rahmenteil der Motorhacke fixiert. Die Vorspannung des Antivibrationselements ist davon abhängig, wie fest die Befestigungsschrauben für die Lenkeranordnung angezogen werden.

Aus der US 2013/0121753 A1 ist ein tragbares Arbeitsgerät, nämlich ein Freischneider, bekannt, dessen Motorgehäuse über ein Antivibrationselement vom Schaft schwingungsentkoppelt ist. Das Antivibrationselement ist hülsenförmig ausgebildet und in eine Aufnahme des Motorgehäuses eingeschoben. Da das Antivibrationselement in der Aufnahme in radialer Richtung komprimiert angeordnet sein soll, ist die Montage erschwert.

Der Erfindung liegt die Aufgabe zugrunde, ein bodengeführtes Arbeitsgerät der gattungsgemäßen Art zu schaffen, bei dem auf einfache Weise eine gute Vibrationsdämpfung der Lenkeranordnung erreicht wird.

Diese Aufgabe wird durch ein bodengeführtes Arbeitsgerät mit den Merkmalen des Anspruchs 1 gelöst.

Es ist vorgesehen, dass das Antivibrationselement hülsenförmig ausgebildet ist und in einer Aufnahme angeordnet ist, die von mindestens zwei über Befestigungsmittel miteinander verbundenen Teilschalen gebildet ist. Es ist ein Anschlag vorgesehen, der ein Innenmaß der Aufnahme bei fixierten Befestigungsmitteln bestimmt. Das Innenmaß ist in einem Bereich, in dem das Antivibrationselement an der Aufnahme anliegt, und in einer Ebene, die senkrecht zur Längsmittelachse der Aufnahme liegt, gemessen. Das Innenmaß ist dabei vorteilhaft in Spannrichtung der Befestigungsmittel gemessen. Über den Anschlag kann das Innenmaß der Aufnahme konstruktiv vorgegeben werden. Dadurch kann auf einfache Weise eine definierte Vorspannung des Antivibrationselements eingestellt werden. Da das Antivibrationselement durch das Anziehen der Befestigungsmittel komprimiert wird, ist die Montage vereinfacht.

Vorteilhaft weist das Antivibrationselement in dem Bereich, in dem das Innenmaß der Aufnahme gemessen ist, bei voneinander gelösten Teilschalen ein Außenmaß auf, das um etwa 1% bis etwa 20% größer als das Innenmaß der Aufnahme ist. Bevorzugt ist das Außenmaß um etwa 2% größer als das Innenmaß der Aufnahme. Das Innenmaß der Aufnahme und das Außenmaß des Antivibrationselements sind dabei in der gleichen Richtung und an der gleichen Stelle des Arbeitsgeräts gemessen. Die Differenz zwischen dem Außenmaß und dem Innenmaß gibt an, wie stark das Antivibrationselement an dieser Stelle komprimiert, also vorgespannt wird.

Ein einfacher Aufbau ergibt sich, wenn der Anschlag durch eine Wand einer ersten Teilschale gebildet ist, die an einer Wand der zweiten Teilschale anliegt. Bevorzugt ist die Aufnahme von zwei Teilschalen begrenzt, die mit ihren etwa in Längsrichtung der Aufnahme verlaufenden Wänden aneinander anliegen und zwei Anschläge bilden. Die beiden Anschläge liegen vorteilhaft in einer Ebene, und das Innenmaß der Aufnahme und das Außenmaß des Antivibrationselements sind senkrecht zu dieser Ebene gemessen. Die Teilschalen sind vorzugsweise miteinander verschraubt.

Das Arbeitgerät ist insbesondere eine Motorhacke, die einen Bremssporn umfasst. Eine einfache Gestaltung ergibt sich, wenn eine erste Teilschale an einem Bremsspornhalter angeformt ist. Für die Ausbildung der ersten Teilschale wird dadurch kein zusätzliches Bauteil benötigt. Der Bremssporn besitzt vorteilhaft mindestens eine Vertiefung an seinem Außenumfang. Die Motorhacke besitzt insbesondere einen Fixierbolzen, der zur Fixierung des Bremssporns mindestens teilweise in die Vertiefung ragt. Dabei ragt der Fixierbolzen vorzugsweise mit seinem Außenumfang in die Vertiefung. Die Längsachsen von Bremssporn und Fixierbolzen liegen vorteilhaft quer zueinander und in einem Abstand zueinander. Dadurch, dass der Fixierbolzen in die Vertiefung am Außenumfang des Bremssporns ragt und den Bremssporn nicht durchragt, muss der Fixierbolzen zur Verstellung des Bremssporns nicht vollständig demontiert werden, so dass sich eine einfache Handhabung ergibt. Der Bremssporn besitzt insbesondere eine Einkerbung, an der der Durchmesser des Fixierbolzens verringert ist und der zur Verstellung des Bremssporns in den Bereich des Bremssporns gebracht werden kann, so dass der Bremssporn in seiner Längsrichtung verstellt werden kann. Der Fixierbolzen ist hierzu vorzugsweise gefedert gelagert.

Der Bremssporn ist vorzugsweise um seine Längsmittelachse drehbar. Der Bremssporn ist insbesondere um einen Winkel von mindestens 30°, vorzugsweise um einen Winkel von mindestens 90°, besonders bevorzugt um einen Winkel von mindestens 120° drehbar gehalten. Die Drehbeweglichkeit des Bremssporns ist vorzugsweise so ausgelegt, dass der Bremssporn nicht in den Bereich der Hacksterne der Motorhacke gelangen kann und auch nicht mit einem Fahrwerk der Motorhacke in Kontakt kommen kann. Vorzugsweise wird der Winkel, um den der Bremssporn drehbar gehalten ist, durch die Vertiefung am Außenumfang des Bremssporns festgelegt, die sich über einen entsprechenden Umfangswinkel erstreckt. Durch die Schwenkbarkeit des Bremssporns kann sich der Bremssporn bei Kurvenfahrten selbstständig ausrichten. Dadurch wird eine einfache Bedienung der Motorhacke erreicht.

Vorteilhaft ist eine zweite Teilschale der Aufnahme an einem Gehäuseteil des Arbeitsgeräts angeformt. Dadurch wird für die zweite Teilschale kein zusätzliches Bauteil benötigt. Es ergibt sich ein einfacher Aufbau. Das Arbeitsgerät besitzt insbesondere ein Getriebe, das in einem Getriebegehäuse angeordnet ist, und die zweite Teilschale ist an dem Getriebegehäuse angeformt. Ein einfacher Aufbau ergibt sich, wenn ein Ende eines Schafts der Lenkeranordnung in das Antivibrationselement ragt. Um den Schaft in der Aufnahme in Längsrichtung des Schafts und in Umfangsrichtung zu sichern, ist vorteilhaft vorgesehen, dass der Schaft in einem Abschnitt eine Einbuchtung besitzt, und dass im Bereich der Einbuchtung ein den freien Querschnitt verengendes Sicherungselement in die Aufnahme ragt. Das Sicherungselement ist insbesondere als Querrippe der Aufnahme ausgebildet. Dadurch werden zur axialen Sicherung und zur Drehsicherung des Schafts keine zusätzlichen Bauteile benötigt. Das Sicherungselement ist bevorzugt an einer an einem Gehäuseteil des Arbeitsgeräts angeordneten Teilschale ausgebildet.

Um eine gute Positionierung des Antivibrationselements in der Aufnahme zu erreichen, ist vorteilhaft vorgesehen, dass das Antivibrationselement einen radial nach außen ragenden Rand besitzt, der an einer im Betrieb des Arbeitsgeräts nach oben weisenden Stirnseite der Aufnahme anliegt. Vorteilhaft ist im Bereich des Rands eine Dichtlippe am Antivibrationselement vorgesehen, die am Schaft anliegt und dadurch auch das Eintreten von Verschmutzungen in den Bereich zwischen Schaft und Antivibrationselement vermeidet.

Ein Ausführungsbeispiel der Erfindung wird im Folgenden anhand der Zeichnung erläutert. Es zeigen:
- Fig. 1: eine perspektivische Darstellung einer Motorhacke,
- Fig. 2: eine perspektivische Darstellung des Fahrwerks der Motorhacke aus Fig. 1,
- Fig. 3: eine Seitenansicht des Bereichs eines Bremsspornhalters,
- Fig. 4: einen Schnitt durch den Bereich der Fixiereinrichtung und durch den Bremssporn,
- Fig. 5: eine vergrößerte Darstellung des Bereichs des Antivibrationselements aus Fig. 4,

- Fig. 6: einen Schnitt entlang der Linie VI-VI in Fig. 5,
- Fig. 7: einen Schnitt entlang der Linie VII-VII in Fig. 5 in Mittelstellung des Bremssporns,
- Fig. 8: den Bereich des Bremssporns aus Fig. 7 in vergrößerter Darstellung,
- Fig. 9: einen Schnitt entlang der Linie VII-VII in Fig. 5 in seitlicher Stellung des Bremssporns.

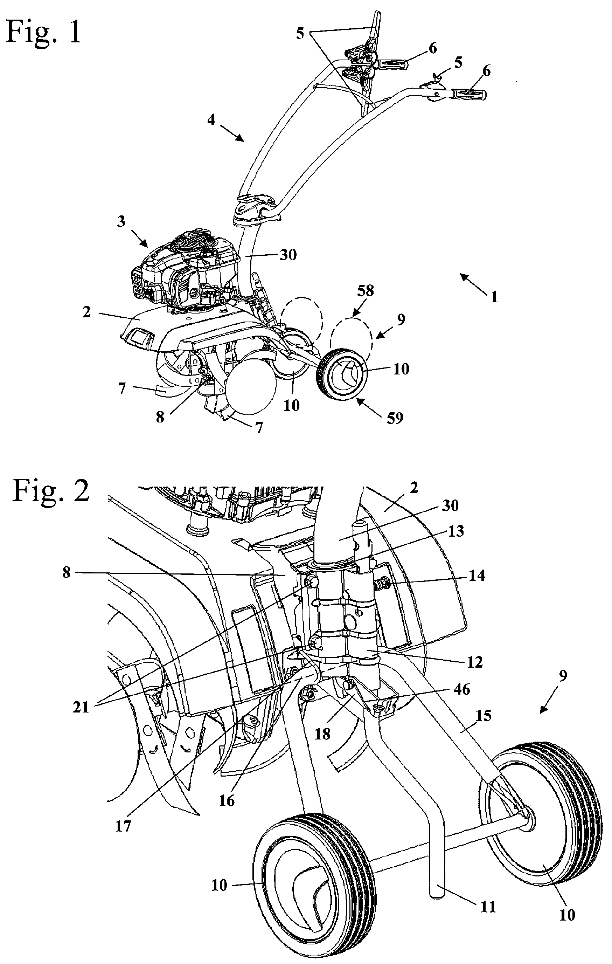

Fig. 1 zeigt als Ausführungsbeispiel für ein bodengeführtes Arbeitsgerät eine Motorhacke 1. Anstatt der Motorhacke 1 kann das Arbeitsgerät auch ein anderes bodengeführtes Arbeitsgerät sein, dessen Werkzeug im Betrieb in Eingriff mit dem Boden kommt. Die Motorhacke 1 besitzt als Werkzeug mehrere Hacksterne 7, die von einem Antriebsmotor 3 rotierend angetrieben werden. Die Motorhacke 1 besitzt eine Haube 2, an der der Antriebsmotor 3 angeordnet ist. Der Antriebsmotor 3 kann auch an oder in einem Gehäuse der Motorhacke 1 angeordnet sein. Der Antriebsmotor 3 treibt die Hacksterne 7 über ein nicht gezeigtes, in einem Getriebegehäuse 8 angeordnetes Getriebe rotierend an. Zum Führen der Motorhacke 1 über den Boden dient eine Lenkeranordnung 4. An der Lenkeranordnung 4 sind zwei Handgriffe 6 festgelegt. Benachbart zu den Handgriffen 6 sind Bedienelemente 5 zur Bedienung des Antriebsmotors 3 vorgesehen.

Die Motorhacke 1 besitzt ein Fahrwerk 9, das zwei Räder 10 umfasst. Im Betrieb ist das Fahrwerk 9 nach oben geklappt, so dass die Räder 10 nicht mit dem Boden in Kontakt sind. Diese Stellung des Fahrwerks 9 ist in Fig. 1 als Betriebsposition 58 schematisch gestrichelt eingezeichnet. Mit durchgezogener Linie ist die Motorhacke 1 mit dem Fahrwerk 9 in einer Transportposition 59 gezeigt. Zum Transportieren der Motorhacke 1 drückt der Bediener die Handgriffe 6 nach unten und verschwenkt dadurch die Hacksterne 7 nach oben, so dass diese außer Eingriff mit dem Boden kommen und die Motorhacke 1 mit dem Fahrwerk 9 über den Boden gefahren werden kann.

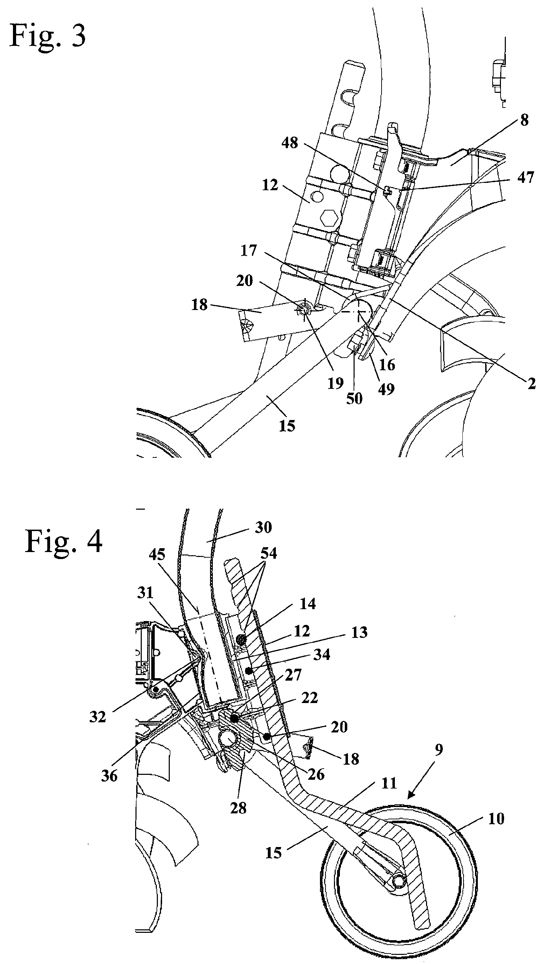

Wie Fig. 2 zeigt, besitzt die Motorhacke 1 einen Bremssporn 11, der im Betrieb in den Boden eingreift und die Motorhacke 1 bremst. Der Bremssporn 11 ist an einem Bremsspornhalter 12 gehalten. Der Bremsspornhalter 12 ist im Ausführungsbeispiel als Blechbiegeteil ausgebildet und mit Befestigungsschrauben 21 am Getriebegehäuse 8 festgeschraubt. Zwischen dem Bremsspornhalter 12 und dem Getriebegehäuse 8 ist ein Schaft 30 der Lenkeranordnung 4 fixiert. Der Schaft 30 ragt dabei in ein Antivibrationselement 13, das hülsenförmig ausgebildet ist und in einer zwischen dem Getriebegehäuse 8 und dem Bremsspornhalter 12 gebildeten Aufnahme 36 (Fig. 4) gehalten ist. Das Antivibrationselement 13 kann dabei einen runden Querschnitt oder einen unrunden Querschnitt, beispielsweise einen ovalen Querschnitt oder einen abgeflachten ovalen Querschnitt aufweisen. Im Ausführungsbeispiel besitzen der Schaft 30 und das Antivibrationselement 13 einen ovalen Querschnitt. Zur Fixierung des Bremssporns 11 in unterschiedlichen Positionen ist ein in Fig. 2 gezeigter Fixierbolzen 14 vorgesehen. Es kann vorgesehen sein, dass der Fixierbolzen 14 einen Abschnitt des Antivibrationselements 13 durchragt und dieses dadurch am Bremsspornhalter 12 fixiert.

Das Fahrwerk 9 umfasst ein Lagerelement, nämlich einen Lagerbügel 15, mit dem das Fahrwerk 9 schwenkbar am Bremsspornhalter 12 gelagert ist. Der Lagerbügel 15 ist um eine Schwenkachse 16 schwenkbar am Bremsspornhalter 12 gehalten. Zur Fixierung des Lagerbügels 15 in den unterschiedlichen Schwenkstellungen dient ein Schwenkhebel 18. Der Schwenkhebel 18 ist von einer Schenkelfeder 46 federbeaufschlagt. Auch eine Lagerung des Lagerbügels 15 am Getriebegehäuse 8 kann vorteilhaft sein. Zur Fixierung des Fahrwerks 9 am Getriebegehäuse 8 dient ein Federbügel 17, der am Getriebegehäuse 8 gehalten ist und den Lagerbügel 15 umgreift.

Fig. 3 zeigt die Fixierung des Bremsspornhalters 12 an der Motorhacke 1. Das Getriebegehäuse 8 (Fig. 2) weist einen Vorsprung 48 auf, an dem der Bremsspornhalter 12 mit einer Einhängenut 47 eingehängt ist. Vorteilhaft sind zwei Einhängenuten 47 vorgesehen, die in zwei Vorsprünge 48 einhaken. Dadurch wird eine einfache Montage des Bremsspornhalters 12 erreicht. Der Bremsspornhalter 12 kann zur Vorfixierung zunächst am Getriebegehäuse 8 eingehängt und dann festgeschraubt werden. Wie Fig. 3 auch zeigt, ist der Bremsspornhalter 12 über Schrauben 49, die in Muttern 50 eingeschraubt sind, an der Haube 2 fixiert.

Fig. 3 zeigt auch die Gestaltung des Federbügels 17 und des Schwenkhebels 18. Der Schwenkhebel 18 ist mit einem Lagerbolzen 20 um eine Schwenkachse 19 am Bremsspornhalter 12 gelagert. Der Schwenkhebel 18 besitzt an seiner im Betrieb in Fahrtrichtung nach hinten ragenden, der Haube 2 der Motorhacke 1 abgewandten Seite einen Betätigungsabschnitt, an der ein Bediener den Schwenkhebel 18 nach unten drücken und die Fixierung des Lagerbügels 15 lösen kann. Wie Fig. 4 zeigt, besitzt der Schwenkhebel 18 an der dem Betätigungsabschnitt gegenüberliegenden Seite des Lagerbolzens 20 einen Fixierbolzen 22, der in eine Halteplatte 26 des Lagerbügels 15 eingreift. Die Halteplatte 26 ist fest mit dem Rohr, das den Lagerbügel 15 bildet, verbunden und erstreckt sich etwa senkrecht zur Schwenkachse 16 des Lagerbügels 15 (Fig. 3).

Die Halteplatte 26 besitzt die in Fig. 4 gezeigten Rastvertiefungen 27 und 28, in die der Fixierbolzen 22 eingreifen und dadurch das Fahrwerk 9 in der jeweiligen Position fixieren kann. Die Rastvertiefung 27 ermöglicht die Fixierung des Fahrwerks 9 in der Transportposition 59 (Fig. 2) für den Transport der Motorhacke 1, und die Rastvertiefung 28 dient zur Fixierung des Fahrwerks 9 im Betrieb in der Betriebsposition 58 (Fig. 1). Der Fixierbolzen 22 des Schwenkhebels 18 bildet mit den Rastvertiefungen 27 und 28 der Halteplatte 26 eine Fixiereinrichtung für das Fahrwerk 9. Die Schenkelfeder 46 (Fig. 2) drückt den Fixierbolzen 22 in die Rastvertiefungen 27 bzw. 28 und bewirkt eine sichere Fixierung des Fahrwerks 9 in seinen Raststellungen. Wie Fig. 3 zeigt, verlaufen die Schwenkachsen 19 und 16 von Schwenkhebel 18 und Lagerbügel 15 parallel zueinander. Zum Verstellen des Fahrwerks 9 wird der Schwenkhebel 18 an seinem Betätigungsabschnitt entgegen der Kraft der Schenkelfeder 46 nach unten gedrückt, wodurch der Fixierbolzen 22 aus der Rastvertiefung 27 gelangt (Fig. 4), und der Lagerbügel 15 verschwenkt werden kann.

Wie Fig. 4 auch zeigt, ist der Schaft 30 im Antivibrationselement 13 drehgesichert. Hierzu ist eine Querrippe 31 am Getriebegehäuse 8 ausgebildet, die in eine Einbuchtung 32 des Schafts 30 ragt. Das Antivibrationselement 13 weist eine entsprechende Einbuchtung am Außenumfang sowie eine entsprechende Verengung an seiner Innenseite auf. Die Querrippe 31 verengt den freien Querschnitt der Aufnahme 36 und fixiert den Schaft 30 auch in Richtung seiner Längsrichtung. Die Querrippe 31 bildet damit ein am Getriebegehäuse 8 angeformtes Sicherungselement für den Schaft 30.

Wie die Figuren 3 und 4 zeigen, ist der Bremsspornhalter 12 als Blechbiegeteil ausgebildet. Der Bereich, in dem der Bremssporn 11 angeordnet ist, ist etwa U-förmig ausgebildet. Die beiden Seitenwände des U setzen sich in Richtung auf das Getriebegehäuse 8 fort. Zur Fixierung des Bremssporns 11 in Richtung auf die offene Seite des U, also zum Getriebegehäuse 8 hin, ist ein Führungsbolzen 34 vorgesehen, der den Bereich des Bremsspornhalters 12, in dem der Bremssporn 11 angeordnet ist, an der offenen Seite verschließt. Eine weitere Führung für den Bremssporn 11 bildet der Lagerbolzen 20 des Schwenkhebels 18. Dieser ist entsprechend dem Führungsbolzen 34 ausgebildet und verschließt den Uformigen Bereich des Bremsspornhalters 12 ebenfalls.

Wie Fig. 4 zeigt, besitzt der Bremssporn 11 mehrere, im Ausführungsbeispiel drei seitliche Vertiefungen 54. Der Fixierbolzen 14 ist als Querbolzen ausgebildet und ragt mit seinem Außenumfang teilweise in die seitlichen Vertiefungen 54. Dadurch kann der Bremssporn 11 in unterschiedlichen Höhen am Bremsspornhalter 12 fixiert werden.

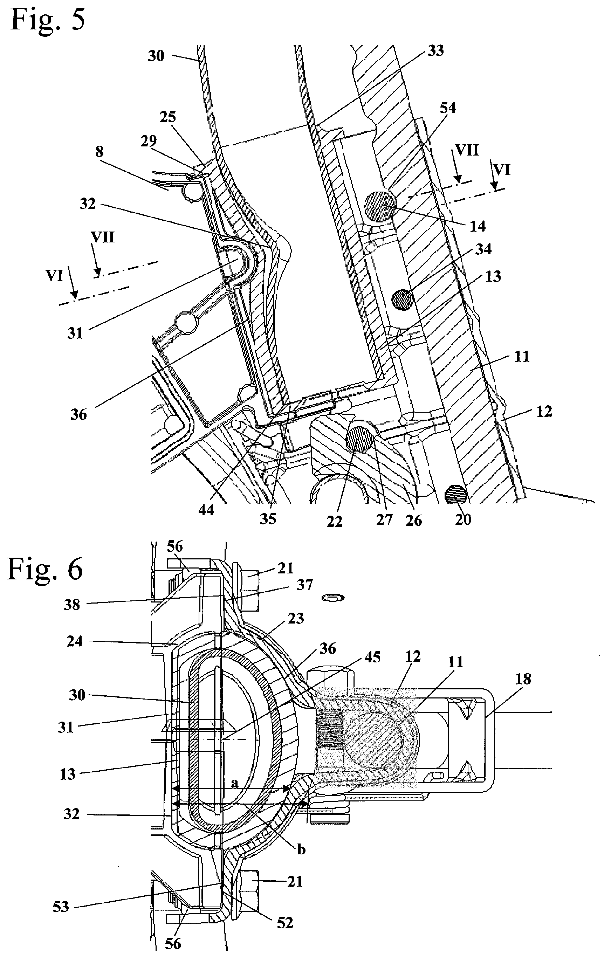

Fig. 5 zeigt die Gestaltung des Antivibrationselements 13 im Einzelnen. Das Antivibrationselement 13 ist in der Aufnahme 36 zwischen dem Getriebegehäuse 8 und dem Bremsspornhalter 12 angeordnet. Das Antivibrationselement 13 ist hülsenförmig ausgebildet und besitzt an seiner nach oben weisenden Seite einen nach außen ragenden Rand 25, der an einer Stirnseite 29 der Aufnahme 36 anliegt. Benachbart zum Rand 25 weist das Antivibrationselement 13 eine nach innen ragende Dichtlippe 33 auf, die am Schaft 30 vorteilhaft anliegt. In Fig. 5 ist zwischen dem Antivibrationselement 13 und dem Schaft 30 geringes Spiel gezeigt. Vorteilhaft liegt das Antivibrationselement 13 jedoch über den gesamten Außenumfang des Schafts 30 am Schaft an. An der im Betrieb dem Boden zugewandt liegenden Unterseite der Aufnahme 36 weist das Antivibrationselement 13 einen Boden 35 auf, an dem der Schaft 30 mit seiner Stirnseite 44 anliegt. In Fig. 5 ist auch die Anordnung des Fixierbolzens 14 in einer Vertiefung 54 des Bremssporns 11 sowie die Anordnung des Fixierbolzens 22 der Fixiereinrichtung in der Rastvertiefung 27 der Halteplatte 26 gezeigt.

Wie Fig. 6 zeigt, ist die Aufnahme 36 durch eine erste, an dem Bremsspornhalter 12 ausgebildete Teilschale 23 und eine zweite, am Getriebegehäuse 8 ausgebildete Teilschale 24 gebildet. Zwischen den beiden Teilschalen 23 und 24 ist das Antivibrationselement 13 angeordnet, in das der Schaft 30 ragt. Wie Fig. 6 auch zeigt, besitzt die Aufnahme 36 einen näherungsweise ovalen, im Bereich der Querrippe 31 abgeflachten Querschnitt. Die Aufnahme 36 besitzt eine Längsmittelachse 45. Der Bremsspornhalter 12 besitzt Wände 37 und 52, die etwa in Richtung der Längsmittelachse 45 der Aufnahme 36 verlaufen. Die Wände 37 und 52 liegen an Wänden 38 und 53 des Getriebegehäuses 8 an. Im Bereich der Wände 37, 38 und der Wände 52, 53 ist der Bremsspornhalter 12 mit den Befestigungsschrauben 21 am Getriebegehäuse 8 fixiert. Die Befestigungsschrauben 21 erstrecken sich dabei senkrecht durch die Wände 37 und 52 und durch die Wände 38 und 53 und sind in Muttern 56 gehalten.

Wie Fig. 6 zeigt, besitzt die Aufnahme 36 in einem Bereich, in dem das Antivibrationselement 13 an der Aufnahme 36 anliegt, ein Innenmaß a. Im Ausführungsbeispiel erstreckt sich die Teilschale 23 nicht über den gesamten aus der Teilschale 24 ragenden Umfang des Antivibrationselements 13, sondern besitzt in dem Bereich, der dem Bremssporn 12 zugewandt liegt, einen Abschnitt, in dem der Umfang des Antivibrationselements 13 frei liegt. Das Innenmaß a ist in dem Bereich gemessen, in dem das Antivibrationselement 13 an der Teilschale 23 anliegt. Das Innenmaß a ist dabei senkrecht zur Längsmittelachse 45 der Aufnahme 36 und in der Richtung, in der die Befestigungsschrauben 21 die beiden Teilschalen 23 und 24 aneinander andrücken, gemessen. Wird die Teilschale 23 durch Lösen der Befestigungsschrauben 21 von der Teilschale 24 entfernt, so weitet sich das Antivibrationselement 13 auf. Das Antivibrationselement 13 ist in der Aufnahme 36 unter Vorspannung gehalten. In Fig. 6 ist mit gestrichelter Linie die Abmessung des Antivibrationselements 13 bei gelöster Teilschale 23 angedeutet. In dem Bereich, in dem das Innenmaß a gemessen ist, besitzt das Antivibrationselement 13 bei gelöster Teilschale 23, also in nicht vorgespanntem Zustand, ein Außenmaß b, das größer als das Innenmaß a ist. Das Außenmaß b ist vorteilhaft um etwa 1% bis etwa 20% des Innenmaßes a größer als das Innenmaß a. Bevorzugt ist das Außenmaß b um etwa 2% größer als das Innenmaß a. Der besseren Darstellbarkeit halber ist das Außenmaß b in Fig. 6 deutlich größer als das Innenmaß a dargestellt. Das Innenmaß a ist dabei durch den durch die Wände 37 und 38 und den durch die Wände 52 und 53 gebildeten Anschlag konstruktiv vorgegeben. Dadurch wird das Antivibrationselement 13 beim Montieren des Bremsspornhalters 12 am Getriebegehäuse 8 um ein konstruktiv vorgegebenes Maß komprimiert und vorgespannt. Dadurch kann eine gute Vibrationsdämpfung sichergestellt werden. Das Antivibrationselement 13 kann sich gegenüber der Aufnahme 36 aufgrund seiner Vorspannung nicht bewegen.

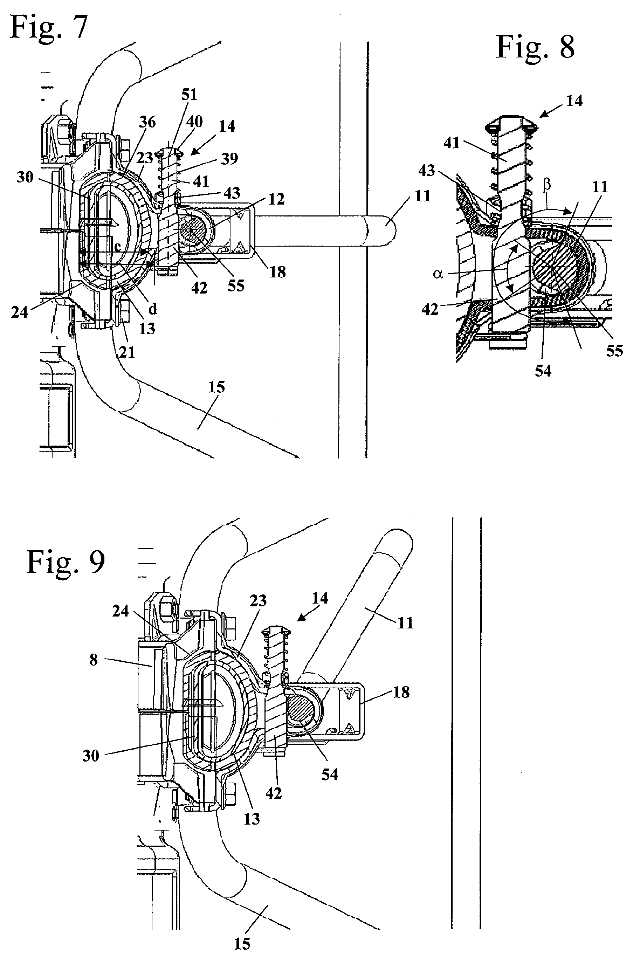

In Fig. 7 ist ein Schnitt durch das Antivibrationselement 13 am unteren Bereich der Querrippe 31 gezeigt. Die Aufnahme 36 besitzt hier ein Innenmaß c, das größer als ein im gleichen Bereich gemessenes Außenmaß d des Antivibrationselements 13 in unbelastetem Zustand ist. Das Außenmaß d ist vorteilhaft um etwa 1% bis etwa 20%, insbesondere um etwa 2% größer als das Innenmaß c. Auch in diesem Bereich wird dadurch eine definierte Vorspannung des Antivibrationselements 13 erreicht. Vorteilhaft ist das Innenmaß über die gesamte Länge der Aufnahme 36 kleiner als das Außenmaß der Aufnahme 36, so dass das Antivibrationselement 13 über seine gesamte Länge in der Aufnahme 36 vorgespannt gehalten ist.

Fig. 7 zeigt den Aufbau des Fixierbolzens 14 im Einzelnen. Der Fixierbolzen 14 besitzt einen Fixierabschnitt 42, an den die Form der seitlichen Vertiefungen 54 im Bremssporn 11 angepasst ist. Der Fixierbolzen 14 besitzt außerdem einen Abschnitt 41 mit verringertem Durchmesser. Zwischen dem Fixierabschnitt 42 und dem Abschnitt 41 ist eine Einkerbung 43 vorgesehen, an der der Außendurchmesser des Fixierbolzens 14 gegenüber dem Abschnitt 41 mit verringertem Durchmesser weiter verringert ist. Wenn die Einkerbung 43 durch Verschieben des Fixierbolzens 14 in Richtung seiner Längsmittelachse 51 im Bereich des Bremssporns 11 angeordnet wird, kann der Bremssporn 11 in Richtung seiner Längsmittelachse 55 verschoben werden. Am Abschnitt 41 ist eine Feder 39 angeordnet, die als Schraubendruckfeder ausgebildet ist und die sich mit einem Ende am Bremsspornhalter 12 abstützt. Das andere Ende der Feder 39 stützt sich an einem Kopf 40 des Fixierbolzens 14 ab, der zur Montage der Feder 39 separat von den Abschnitten 41 und 42 ausgebildet ist. Die Feder 39 spannt den Fixierbolzen 14 in Richtung auf die Stellung vor, in der der Fixierabschnitt 42 im Bereich einer seitlichen Vertiefung 54 angeordnet ist und den Bremssporn 11 in seiner Längsrichtung fixiert. Die Längsmittelachse 51 des Fixierbolzens 14 ist senkrecht zur Längsmittelachse 55 des Bremssporns 11 und beabstandet von der Längsmittelachse 55 angeordnet.

Wie Fig. 8 zeigt, erstreckt sich die Vertiefung 54 über einen Winkel β am Außenumfang des Bremssporns 11. Der Fixierbolzen 14 ragt über einen Winkel α in die Vertiefung 54, der deutlich kleiner als der Winkel β ist. Im Ausführungsbeispiel beträgt der Winkel β mehr als 180°, und der Winkel α beträgt weniger als 90°. Die Differenz zwischen den Winkeln α und β bewirkt eine begrenzte Drehbeweglichkeit des Bremssporns 11. Vorteilhaft ist der Bremssporn 11 um seine Längsmittelachse 55 um einen Winkel von mindestens 30° drehbar gehalten. Bevorzugt ist der Bremssporn 11 um einen Winkel von mindestens 90°, insbesondere um mindestens 120° drehbar gelagert.

In Fig. 7 ist der Bremssporn 11 in einer mittleren Schwenklage gezeigt. Fig. 9 zeigt den Bremssporn 11 in einer auf eine Seite geschwenkten Endstellung. Wie Fig. 9 zeigt, ist der Fixierabschnitt 42 des Fixierbolzens 14 an einem Ende der Vertiefung 54 angeordnet. Eine weitere Drehung des Bremssporns 11 in Fig. 9 im Uhrzeigersinn wird durch den Fixierabschnitt 42 verhindert. Der Bremssporn 11 ist aufgrund der Gestaltung der Vertiefung 54 drehbar, ohne dass der Fixierbolzen 14 betätigt oder gelöst werden muss.

## Patentansprüche

1. Bodengeführtes Arbeitsgerät mit einer Lenkeranordnung (4) zum Führen des Arbeitsgeräts im Betrieb, wobei die Lenkeranordnung (4) über mindestens ein Antivibrationselement (13) an einem Gehäuseteil des Arbeitsgeräts festgelegt ist, **dadurch gekennzeichnet, dass** das Antivibrationselement (13) hülsenförmig ausgebildet ist, und dass das Antivibrationselement (13) in einer Aufnahme (36) angeordnet ist, wobei die Aufnahme (36) von mindestens zwei über Befestigungsmittel miteinander verbundenen Teilschalen (23, 24) gebildet ist, und wobei mindestens ein Anschlag vorgesehen ist, der mindestens ein Innenmaß (a) der Aufnahme (36) bei fixierten Befestigungsmitteln bestimmt, wobei das Innenmaß (a) in einer Ebene senkrecht zur Längsmittelachse (45) der Aufnahme (36) in einem Bereich, in dem das Antivibrationselement (13) an der Aufnahme (36) anliegt, gemessen ist.

2. Arbeitsgerät nach Anspruch 1,
**dadurch gekennzeichnet, dass** das Antivibrationselement (13) in dem Bereich, in dem das Innenmaß (a) gemessen ist, bei voneinander gelösten Teilschalen (23, 24) ein Außenmaß (b) aufweist, das um etwa 1% bis etwa 20% größer als das Innenmaß (a) der Aufnahme (36) ist.

3. Arbeitsgerät nach Anspruch 1 oder 2,
**dadurch gekennzeichnet, dass** ein Anschlag durch eine Wand (37, 52) einer ersten Teilschale (23) gebildet ist, die an einer Wand (38, 53) einer zweiten Teilschale (24) anliegt.

4. Arbeitsgerät nach Anspruch 3,
**dadurch gekennzeichnet, dass** die Aufnahme (36) von zwei Teilschalen (23, 24) begrenzt ist, die mit ihren etwa in Längsrichtung der Aufnahme (36) verlaufenden Wänden (37, 38, 52, 53) aneinander anliegen und zwei Anschläge bilden.

5. Arbeitsgerät nach einem der Ansprüche 1 bis 4,
**dadurch gekennzeichnet, dass** die Teilschalen (23, 24) miteinander verschraubt sind.

6. Arbeitsgerät nach einem der Ansprüche 1 bis 5,
**dadurch gekennzeichnet, dass** das Arbeitsgerät eine Motorhacke (1) ist, die einen Bremssporn (11) umfasst, und dass eine erste Teilschale (23) an einem Bremsspornhalter (12) angeformt ist.

7. Arbeitsgerät nach Anspruch 6,
**dadurch gekennzeichnet, dass** der Bremssporn (11) mindestens eine Vertiefung (54) an seinem Außenumfang aufweist, und dass die Motorhacke (1) einen Fixierbolzen (14) besitzt, der zur Fixierung des Bremssporns (11) mindestens teilweise in die Vertiefung (54) ragt.

8. Arbeitsgerät nach Anspruch 6 oder 7,
**dadurch gekennzeichnet, dass** der Bremssporn (11) um seine Längsmittelachse (55) um einen Winkel von mindestens 30° drehbar gehalten ist.

9. Arbeitsgerät nach einem der Ansprüche 1 bis 8,
**dadurch gekennzeichnet, dass** eine zweite Teilschale (24) an einem Gehäuseteil des Arbeitsgeräts angeformt ist.

10. Arbeitsgerät nach Anspruch 9,
**dadurch gekennzeichnet, dass** das Arbeitsgerät ein Getriebe besitzt, das in einem Getriebegehäuse (8) angeordnet ist, und die zweite Teilschale (24) an dem Getriebegehäuse (8) angeformt ist.

11. Arbeitsgerät nach einem der Ansprüche 1 bis 9,
**dadurch gekennzeichnet, dass** ein Ende eines Schafts (30) der Lenkeranordnung (4) in das Antivibrationselement (13) ragt.

12. Arbeitsgerät nach Anspruch 11,
**dadurch gekennzeichnet, dass** der Schaft (30) in einem Abschnitt eine Einbuchtung (32) besitzt, und dass im Bereich der Einbuchtung (32) ein den freien Querschnitt verengendes Sicherungselement in die Aufnahme (36) ragt.

13. Arbeitsgerät nach Anspruch 12,
**dadurch gekennzeichnet, dass** das Sicherungselement als Querrippe (31) der Aufnahme (36) ausgebildet ist.

14. Arbeitsgerät nach Anspruch 12 oder 13,
**dadurch gekennzeichnet, dass** das Sicherungselement an einer an einem Gehäuseteil des Arbeitsgeräts angeordneten Teilschale (24) ausgebildet ist.

15. Arbeitsgerät nach einem der Ansprüche 1 bis 14,
**dadurch gekennzeichnet, dass** das Antivibrationselement (13) einen radial nach außen ragenden Rand (25) besitzt, der an einer im Betrieb des Arbeitsgeräts nach oben weisenden Stirnseite (29) der Aufnahme (36) anliegt.

## Claims

1. Ground-guided work device with a control arrangement (4) to guide the work device during operation, wherein the control arrangement (4) is fixed to a housing part of the work device via at least one anti-vibration element (13), **characterised in that** the anti-vibration element (13) is formed as a sleeve, and the anti-vibration element (13) is arranged in a recess (36), wherein the recess (36) is formed from at least two part shells (23, 24) connected to each other via securing means, and wherein at least one stop is provided, which defines at least one internal dimension (a) of the recess (36) when the securing means are fixed, wherein the internal dimension (a) is measured in a plane perpendicular to the longitudinal middle axis (45) of the recess (36) in an area in which the anti-vibration element (13) lies against the recess (36).

2. Work device according to claim 1,
**characterised in that** the anti-vibration element (13) has, in the area in which the internal dimension (a) is measured, when the part shells (23, 24) are detached from each other, an external dimension (b) that is approximately 1% to approximately 2% larger than the internal dimension (a) of the recess (36).

3. Work device according to claim 1 or 2,
**characterised in that** a stop is formed by a wall (37, 52) of a first part shell (23), which lies against a wall (38, 53) of a second part shell (24).

4. Work device according to claim 3,
**characterised in that** the recess (36) is defined by two part shells (23, 24) which lie against each other with their walls (37, 38, 52, 53) extending in the longitudinal direction of the recess (36).

5. Work device according to one of claims 1 to 4,
**characterised in that** the part shells (23, 24) are screwed to each other.

6. Work device according to one of claims 1 to 5,
**characterised in that** the work device is a motorised hoe (1) which comprises a braking spur (11), and a first part shell (23) is formed on a braking spur holder (12).

7. Work device according to claim 6,
**characterised in that** the braking spur (11) has at least one depression (54) on its outer periphery, and the motorised hoe (1) has a fixing bolt (14) which projects at least partially into the depression (54) to secure the braking spur (11).

8. Work device according to claim 6 or 7,
**characterised in that** the braking spur (11) is held so that it can be rotated about its longitudinal middle axis (55) by an angle of at least 30°.

9. Work device according to one of claims 1 to 8,
**characterised in that** a second part shell (24) is formed on a housing part of the work device.

10. Work device according to claim 9,
**characterised in that** the work device has a gearing which is arranged in a gearing housing (8), and the second part shell (24) is formed on the gearing housing (8).

11. Work device according to one of claims 1 to 9,
**characterised in that** one end of a shaft (30) of the control arrangement (4) projects into the anti-vibration element (13).

12. Work device according to claim 11,
**characterised in that** the shaft (30) has a notch (32) in a portion, and in the area of the notch (32) a securing element narrowing the free cross-section projects into the recess (36).

13. Work device according to claim 12,
**characterised in that** the securing element is formed as a transverse rib (31) of the recess (36).

14. Work device according to claim 12 or 13,
**characterised in that** the securing element is formed on a part shell (24) arranged on a housing part of the work device.

15. Work device according to one of claims 1 to 14,
**characterised in that** the anti-vibration element (13) has a radially outwardly projecting edge (25) which lies against an end face (29), of the recess (36), pointing upwards during operation of the work device.

## Revendications

1. Machine guidée au sol, avec un dispositif à guidon (4) pour guider la machine, en fonctionnement, le dispositif à guidon (4) étant fixé par l'intermédiaire d'au moins un élément antivibrations (13) à une partie de carter de ladite machine, **caractérisée en ce que** l'élément antivibrations (13) a la forme d'un fourreau, et **en ce que** l'élément antivibrations (13) est disposé dans un logement (36), le logement (36) étant formé par au moins deux parties de coque (23, 24) reliées par des moyens de fixation, et au moins une butée étant prévue, qui définit au moins une dimension intérieure (a) du logement (36), quand les moyens de fixation sont fixés, la dimension intérieure (a) étant mesurée dans un plan perpendiculaire à l'axe longitudinal médian (45) du logement (36), dans une zone où l'élément antivibrations (13) est appliqué contre le logement (36).

2. Machine selon la revendication 1,
**caractérisée en ce que** l'élément antivibrations (13), dans la zone où la dimension intérieure (a) est mesurée, présente quand les parties de coque (23, 24) sont détachées l'une de l'autre une dimension extérieure (b) qui est supérieure d'environ 1% à environ 20% à la dimension intérieure (a) du logement (36).

3. Machine selon la revendication 1 ou 2,
**caractérisée en ce qu'**une butée est formée par une paroi (37, 52) d'une première partie de coque (23), qui est appliquée contre une paroi (38, 53) d'une seconde partie de coque (24).

4. Machine selon la revendication 3,
**caractérisée en ce que** le logement (36) est délimité par deux parties de coque (23, 24) qui sont appliquées l'une contre l'autre avec leurs parois (37, 38, 52, 53) qui s'étendent à peu près dans le sens longitudinal du logement (36), et qui forment deux butées.

5. Machine selon l'une des revendications 1 à 4,
**caractérisée en ce que** les parties de coque (23, 24) sont reliées par vissage.

6. Machine selon l'une des revendications 1 à 5,
**caractérisée en ce que** la machine est une motobineuse (1) qui comprend une béquille de freinage (11), et **en ce qu'**une première partie de coque (23) est rapportée sur un support de béquille de freinage (12).

7. Machine selon la revendication 6,
**caractérisée en ce que** la béquille de freinage (11) présente au moins un creux (54), sur sa circonférence extérieure, et **en ce que** la motobineuse (1) comporte une cheville de fixation (14) qui dépasse au moins en partie dans le creux (54), en vue de la fixation de la béquille de freinage (11).

8. Machine selon la revendication 6 ou 7,
**caractérisée en ce que** la béquille de freinage (11) est montée pour pouvoir tourner suivant un angle d'au moins 30° sur son axe longitudinal médian (55).

9. Machine selon l'une des revendications 1 à 8,
**caractérisée en ce qu'**une seconde partie de coque (24) est rapportée sur une partie de carter de la machine.

10. Machine selon la revendication 9,
**caractérisée en ce que** la machine a une transmission qui est disposée dans un carter de transmission (8), et la seconde partie de coque (24) est rapportée sur le carter de transmission (8).

11. Machine selon l'une des revendications 1 à 9,
**caractérisée en ce qu'**une extrémité d'une tige (30) du dispositif à guidon (4) dépasse dans l'élément antivibrations (13).

12. Machine selon la revendication 11,
**caractérisée en ce que** la tige (30) présente dans un tronçon un renfoncement (32), et **en ce que** dans la zone du renfoncement (32), un élément de blocage qui rétrécit la section transversale libre dépasse dans le logement (36).

13. Machine selon la revendication 12,
**caractérisée en ce que** l'élément de blocage est conçu comme une nervure transversale (31) du logement (36).

14. Machine selon la revendication 12 ou 13,
**caractérisée en ce que** l'élément de blocage est formé sur une partie de coque (24) disposée sur une partie de carter de la machine.

15. Machine selon l'une des revendications 1 à 14,
**caractérisée en ce que** l'élément antivibrations (13) présente un bord (25), saillant radialement vers l'extérieur, qui est appliqué contre un côté frontal (29) du logement (36) qui est dirigé vers le haut, pendant le fonctionnement de la machine.
